# EUROPEAN PATENT SPECIFICATION

(11) **EP 2 365 669 B1**
(45) Date of publication and mention of the grant of the patent: **31.07.2013**
(21) Application number: 10002543.6
(22) Date of filing: 10.03.2010
(51) Int. Cl.: H04L 12/58

(54) **Method and device for electronic service of certified electronic messages**
Verfahren und Vorrichtung für elektronischen Dienst zertifizierter elektronischer Nachrichten
Procédé et dispositif de service électronique de messages électroniques certifiés

(43) Date of publication of application: 14.09.2011
(73) Proprietor: Cepris d.o.o., 2000 Maribor (SI)
(72) Inventor: Kezmah, Bostjan, 2000 Maribor (SI); Kezmah, Urska, 2000 Maribor (SI); Hericko, Marjan, 2000 Maribor (SI)
(74) Representative: Marn, Jure

(56) References cited:
- EP-A1- 1 646 194
- FR-A1- 2 839 406
- US-A- 6 137 884
- GENNAI A SHAHIN ISTI-CNR C PETRUCCI A VINCIARELLI DIGITPA F: "Certified Electronic Mail; draft-gennai-smime-cnipa-pec-06.txt" CERTIFIED ELECTRONIC MAIL; DRAFT-GENNAI-SMIME-CNIPA-PEC-06.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 6, 8 March 2010 (2010-03-08), pages 1-63, XP015067819 [retrieved on 2010-03-08]

## Description

### Technical field

Postal services; communication; electronic communication

### Technical problem

Currently there are few possibilities to provide for electronic postage. However, these systems have the following technical problems:
- they do not ensure reliable delivery of message sent receipt,
- they require storage of the message sent with the trusted third party,
- some of them require opening of a new, secure electronic mailbox,
- they are not easy to use and compatible with existing protocols and software and
- they do not have integrated solution for setting service properties on the sender end and integrated solution for billing per service.

Method and device for electronic service solves a technical problem of a generally useful, secure electronic service.

General usefulness means:
- Compatibility with existing protocols for message exchange (e.g. protocols for delivery of electronic mail, e.g. SMTP, POP3).
- Minimal number of exchanged messages in the communication chain.
- Minimal amount of data exchanged in the communication chain.
- Various options for reception of the message depending on equipment and capacity of the receiving party.
- Full compatibility with existing applications and systems for message exchange without change of the applications (e.g. applications for sending and receiving of electronic mail).
- Possibility of automation of electronic service procedures in a way that allows use of unchanged procedures of message exchange and without change of existing application software.
- Does not require (but allows) storage of messages with the service provider.
- Allows for the separation of service provider, payment processor and message delivery and storage service.
- Service operation does not depend on content, format and attachments of the message being sent.

### State of the art

There are a number of electronic services for electronic exchange of messages with the following characteristics (fair certified mail service):
- Receiver cannot read the message without confirming read receipt.
- The receiver has to receive the message in a web based electronic mail client or in a special secure electronic mailbox with distinctive electronic address.

Secure electronic mail service should have the following characteristics:
- Confirmed transactional documents (e.g. sent receipt, read receipt) cannot be forged by using reasonable means.
- Unauthorized or unpowcrcd user for receiving the message cannot read the content of the message sent by using reasonable means.
- Reliability means that a system works as expected and that it is capable of storing data and resuming procedures in the case of usual interference in the system operation (e.g. network connection failure).

US 6 137 884 A discloses a method for electronic service of certified electronic messages in that a sender of a message manually or automatically adds service data.

FR 2 839 406 A1 discloses a recorded electronic mail transmission system which has an additional addressee registration stagc with sending of physical and electronic address identification data to the operator server for generation of an encrypted electronic activation key and login identifier using calls to a digital page with limited time validity session key.

EP 1 646 194 A1 discloses the method involving producing a message and a connection whose selection permits to activate active content of another message. The former message is transmitted to destination of a recipient identified by a recipient address. An encryption/decryption key is transmitted towards a validation server. An acknowledgement is transmitted by the server when it receives a request for transmitting the key.

Method and device for electronic service of certified electronic messages solves above referenced technical problem of assuring sender of the message that it can obtain the message sent receipt and provides protection that will prohibit receiving party reading of the message content without confirming electronic message received receipt at the same time with as minimum change in existing infrastructure of the sending and receiving party as possible. The proposed solution protects anonymity of the sender, privacy of the message content and introduces method for per service payment. Because of the proposed method for message sending the sender does not need additional capacities for ciphering or electronic signing of messages.

The system is based on at least one device that comprises of at least central processing unit with accompanying circuitry for operation of the central processing unit and its communication with other parts of the device, power supply unit, temporary memory for reading and writing, controller, network adapter, permanent memory for reading and writing and on/off button.

Permanent memory for reading and writing comprises operating system that is loaded at device startup. The latter loads software intended for operation of message service. The device may be managed with web interface that is part of the message service device and runs on a web server that may also be part of the operating system. Management may also be possible with the usage of a display and a keyboard if the device has appropriate input/output interfaces allowing direct connection of external devices. Permanent storage additionally includes software for data management (database) configured in a way that allows storage of data in permanent memory. Settings may allow usage of internal or external database.

The device has to be network connected and configured in a way that allows communication with message senders, receivers and intermediaries.

Below, the device is further described with help of figures whereas figures form part of the patent application.

In the figures the following abbreviations and signs are used:
Method A1 is a transmission of the message M, data for message routing RT and electronic stamp S from the sender A to the message intermediary D. Commonly this may be achieved using SMTP protocol to transmit a message to message intermediary D, with message M as a message body and any attachments and additional attachment S with electronic stamp data and routing data RT e.g. as a part of the recipient address. The sender receives message sent receipt R as a message (may include electronic signature) with optional attachment using common mail infrastructure.
Method A2 is a transmission of the message M, data for message routing RT and electronic stamp S from the message intermediary D to the service provider system DC1. Commonly this is achieved using SMTP protocol to transmit a message to message intermediary D, with message M as a message body and any attachments and additional attachment S with electronic stamp data and routing data RT e.g. as a part of the recipient address. This is as a part of normal operation of the message intermediary D, without any change to its infrastructure. The sender receives message sent receipt R as a message (may include electronic signature) with optional attachment using common mail infrastructure.
Method A3 is a transmission of the message M and electronic stamp S from the message sender A to the service provider system DC1. This may be achieved using SMTP protocol to transmit a message to the service provider system DC1, with message M as a message body and any attachments and additional attachment S with electronic stamp data. The sender receives message sent receipt R as a message (may include electronic signature) with optional attachment using common mail infrastructure.
Method A4 is a transmission of the message M from the message sender A to the message proxy DC2. This may be achieved using SMTP protocol to transmit a message to the message proxy DC2, with message M as a message body and any attachments. The message proxy or the sender receives sent receipt as a message (may include electronic signature) with optional attachment using common mail infrastructure (e.g. SMTP protocol) or other, even proprietary protocol.
Method A5 is a transmission of the message M and electronic stamp S from the message proxy DC2 to the service provider system DC1. Message proxy DC2 generates or otherwise obtains electronic stamp S automatically (e.g. by reading it from local disc drive or by acquiring it from the service provider on request). The transmission alone may be achieved using SMTP protocol to transmit a message to the service provider system DC1, with message M as a message body and any attachments and additional attachment S with electronic stamp data. A proprietary or other protocol can be used instead of SMTP protocol or SMTP headers may be used for that purpose, e.g. for transmitting stamp information S to avoid altering the original message - e.g. to support sending of electronically signed or encrypted message M.
Method C1 is a transmission of the message M to the message intermediary or final mailbox using common message exchange protocols, e.g. SMTP protocol. C1 is in use for forwarding ordinary electronic messages.
Method C2 is a transmission of the encrypted message C as an attachment and with the message header CH and message body I (with optional instructions on how to obtain the message and other information) to the mailbox of the recipient E (or optionally intermediary) using a common protocol, e.g. SMTP or proprietary protocol when both DC1 and E support this protocol. Message header CH contains information that uniquely (and securely where appropriate) identifies message M and the service itself- e.g. this may be a simple unique identifier or unique identifier encrypted in a string with additional information about the service - e.g. recipients that will be allowed to sign message received receipt. Because DC1 may store the message M or encrypted message C, delivery of the message to the electronic mailbox E may be repeated after certain timeout period, allowing for transactional integrity.
Method B1 is a common method of receiving a message from the electronic mailbox E, e.g. using POP3 or proprietary protocol. The message contains optional body I (with instructions on how to obtain the message and other information), message header CH containing information that uniquely (and securely where appropriate) identifies message M and the service itself - e.g. this may be a simple unique identifier or unique identifier encrypted in a string with additional information about the service - e.g. recipients that will be allowed to sign message received receipt; and encrypted message C as a message attachment.
Method B2 is a common method of receiving a message from the electronic mailbox, e.g. using a POP3 or proprietary protocol, though request is passed through the message proxy DC3 and on to the mailbox E using method B3. When the message proxy DC3 detects an encrypted message by observing message header CH and optionally other message content, it automatically requests a signed message received receipt AR on the client side (e.g. through message client/agent B or directly from the user).
Method B3 is a common method of receiving a message from the electronic mailbox, e.g. using a POP3 or proprietary protocol from the electronic mailbox E. The message contains optional body I (with instructions on how to obtain the message and other information), message header CH containing information that uniquely (and securely where appropriate) identifies message M and the service itself - e.g. this may be a simple unique identifier or unique identifier encrypted in a string with additional information about the service - e.g. recipients that will be allowed to sign message received receipt; and encrypted message C as a message attachment.
Method B4 is an exchange of the message received receipt from the receiver B and key K for decrypting encrypted message C to a message M from the service provider DC1. A common protocol for message exchange, e.g. SMTP may be used for this purpose though HTTP based protocols, e.g. SOAP or REST web service may be more appropriate.

Alternatively, method B4 may be executed "manually", without a message proxy. In that case the receiver manually uploads encrypted message C and message received receipt to the service provider DC1 (e.g. through a website) and may than download the unencrypted message M from the service provider DC1. Because encrypted message C may be stored at the message recipient B, the procedure can be repeated in an event of a failure, allowing for transactional integrity.

Alternatively, encrypted message C may be uploaded to the service provider automatically, e.g. by hiding the encrypted message as a hidden form parameter in an HTML message and by using POST method to post the encrypted message C to the website of the service provider DC1 and requiring from the receiver B to electronically sign a message received receipt on the website of the service provider DC1 and than allowing the receiver B to view, download the message or post the message to itself using a common mail exchange protocol, e.g. SMTP.

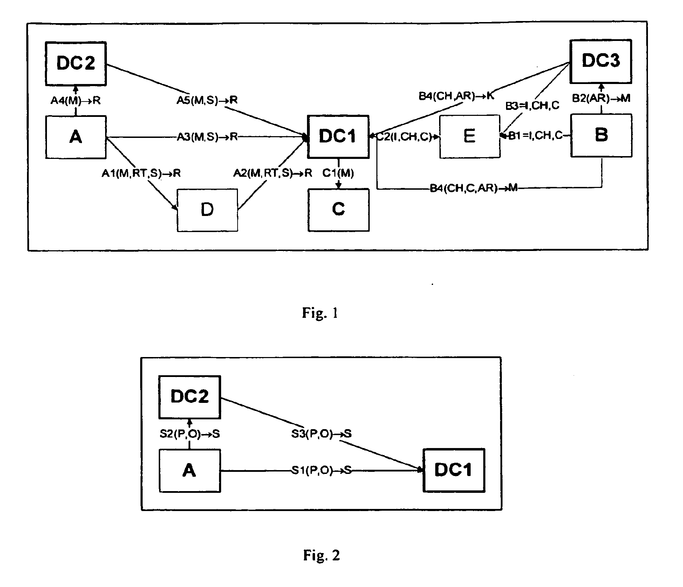

Method S1 on figure 2 is a manual method of obtaining the electronic stamp S. The sender A requests a stamp from the service provider DC1, e.g. using a website, and provides payment information, e.g. credit card number, signed contract or similar, and specifies service options, e.g. whether the message should be stored with the service provider, the receivers that may sign the message received receipt, the recipients themselves etc.; and the service provider approves the transaction and packages information into a stamp S, e.g. an XML document that may be electronically signed and fully or partially encrypted.

Method S2 on figure 2 is an automatic alternative to the method S1. The sender A may request an electronic stamp manually (e.g. by choosing a button on the message proxy DC2 user interface) or by sending a message M through message proxy DC2 as described in method A5. The message proxy may be capable of determining P from other sources (e.g. by reading it from a disc drive) and 0 from other sources (e.g. from message contents, message header, message attachments or other message parts). The message proxy may also be capable of retrieving electronic stamp from other sources, e.g. from a file on a local disc drive or some kind of trusted storage, e.g. smart card, secure storage.

The message proxy DC2 uses method S3 on figure 2 to request message stamp S from the service provider DC1, e.g. by using a common mail protocol like SMTP, or an HTTP based protocol like SOAP or REST web service, to send payment information P and service options 0 to the service provider DC1 and obtain electronic stamp S, e.g. in a form of an XML document, that may be electronically signed and/or fully or partially encrypted.

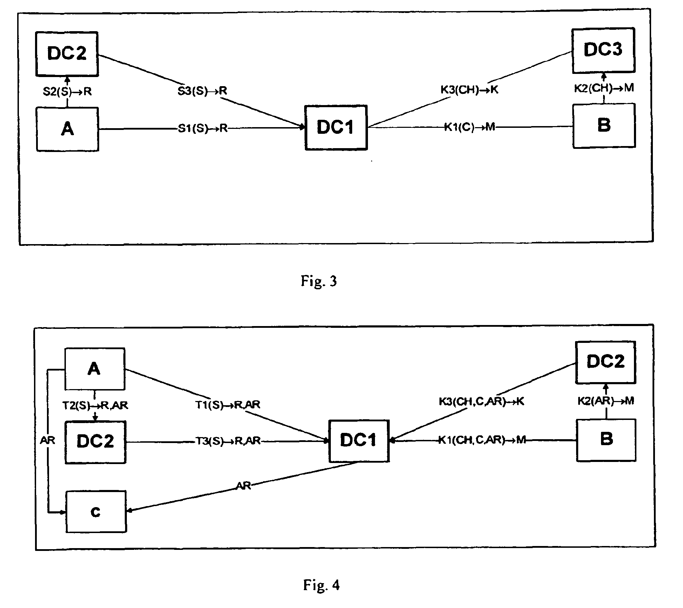

Method S1 on figure 3 allows for transactional integrity. The sender A may at any time re-send the electronic stamp S to the service provider, e.g. using SMTP protocol or by uploading it to the website of the service provider and redeem the message sent receipt R, e.g. by using common electronic mail protocol - SMTP or by viewing/downloading it on the website of the service provider DC1. The message sent receipt R may be in the form of XML data that may be electronically signed and/or fully or partially encrypted.

Method S2 on figure 3 allows for transactional integrity through the message proxy DC2. The sender A may re-send the message, electronic stamp S or choose a function in the message proxy DC2 to obtain message sent receipt R.

The message proxy uses method S3 on figure 3 to obtain message sent receipt R as a response on request of method S2 or on its own request. It may receive electronic stamp S as a part of the message from the sender A or directly from the user, from a disc drive or other source. It uses common mail protocol, e.g. SMTP or HTTP based protocol like SOAP or REST web service to obtain message sent receipt R from the service provider DC1 by supplying electronic stamp S. Message sent receipt R may be XML document, may be electronically signed and/or fully or partially encrypted.

Method K1 allows receiver B to redeem lost message M by re-sending message C to the service provider e.g. by using common SMTP protocol with attachment C or by uploading C to the website of the service provider and viewing/downloading/sending message M or by re-activating automatic procedure to upload encrypted message C to the website as described in method B4. The receiver B may also use method K2 to redeem lost message M by supplying at least message header CH to the message proxy DC3, e.g. by sending a message with message header CH or attachment C through the message proxy DC3 or by directly supplying message proxy with CH or C using a user function.

Message proxy DC3 uses a method K3 to redeem lost key K by supplying at least message header CH and/or encrypted message C to the service provider DC1, e.g. by using common SMTP protocol and CH as a message header and/or C as a message attachment or by using HTTP based protocol like REST or SOAP web service and obtaining the key K, e.g. in a form of an XML document that may be electronically signed and/or encrypted or in a form of bytes/string.

Methods K1, K2 and K3, outlined in figure 4 and previously explained in detail in methods B1, B2, B3 and B4 normally result in service provider DC1 sending message received receipt to the sender's A mailbox C using common electronic mail protocol, e.g. SMTP.

The sender A uses method T1 when in doubt whether message received receipt has been lost in transmission, allowing for transactional integrity. The method may use the same protocols as method S1 on figure 3 with the exception that response from the service provider DC1 includes at least message received receipt AR (only message sent received R in method S1) but may also include message sent receipt R.

Method T2 allows to the message sender A to initiate request of message received receipt AR through the message proxy DC2. Message sender A may achieve this by e.g. sending a message with attachment S through message proxy DC2 using common electronic mail protocol SMTP or by selecting user function in message proxy DC2.

Method T3 allows the message proxy DC2 to request message received receipt from the service provider DC1. The method may use the same protocols as method S3 on figure 3 with the exception that response from the service provider DC1 includes at least message received receipt AR (only message sent received R in method S1) but may also include message sent receipt R.

Fig. 1 is a diagram showing operation separated into sending and receiving of messages. The sender A sends messages received by the receiver B. System DC1 (service provider) is responsible for secure general certified electronic service of electronic messages. Additionally proxy (this expression being known in the art) for sending/receiving of messages DC2 and/or DC3 may be used at the sender or receiver end. DC2 or DC3 may be integrated into an existing system for sending messages of the sender A or existing system for receiving messages of the receiver B or integrated into the information system of the sender A or receiver B as a standalone device.

The system DC1 may be a standalone system at the service provider or may be operated by the sender or receiver alone when any of the latter can act in the transaction as a trusted third party.

The system DC1 operates in a way that it automatically separates regular electronic messages from certified electronic messages and may therefore be used as an intermediary in a combination with the existing electronic mail system.

### Figure 1: Operation of the electronic message service system

When sending messages (figure 1) sender A manually or automatically with the aid of the message proxy DC2 adds service data (electronic stamp) S that may among other data include payment data and service properties.

The sender A obtains service data S from the service provider DC1 directly or using a proxy DC2 that obtains service data S from the service provider DC2 automatically. Service data S may be cryptographically protected (e.g. using electronic signature) with the intent to provide authenticity and integrity of the data. In some cases service provider DC1 may allow to the sender to prepare service data S itself without confirmation from the service provider DC1 (e.g. if there exists a valid service agreement and technical means for assuring data authenticity and integrity).

### Figure 2: Acquirement of service data

Figure 2 displays a method for obtaining service data S for sending directly from the service provider. The sender A may use manual method S1 (e.g. using web site of the service provider) in which the sender provides the service provider DC1 with payment data P when it is required and data for service properties 0 when they are required and in that way obtains service data S. Payment data P may be in the form of data for issuing a payment order, payment receipt, receipt of valid service agreement etc.

The automatic procedure (figure 2) for obtaining service data uses dedicated message proxy DC2 that may be provided by the service provider, developed by the sender itself or by a third party. With this method sender A provides message proxy DC2 using a method S2 with optional payment data P and optional service properties O and proxy DC2 obtains from the service provider DC1 service data S using automated data exchange using method S3 (e.g. web service). Method S2 may be invoked at every message being sent using method S2 or proxy DC2 may store some less frequently changed information for a longer time (e.g. payment data P) and in this case the sender A provides them to the proxy DC2 on request only (e.g. at first setup or at setting up proxy DC2 or when all assets from payment receipt P have been spent) or when data changes.

Service properties O may include additional data needed for the service to be carried out, e.g. data about the sender, data about the receiver, data about additional services, e.g. period of storing the message being sent, number of retries in the case of a service failure etc.

### Embodiment: Message sending without proxy

When sending a message without proxy (figure 1) the sender A sends the message M using regular means with method A3 (using existing software and protocol) but adds service data S (e.g. as a message attachment) to message M or message sending software itself may add service data if it is adapted for this purpose. In cases specifically allowed by the service provider DC1 the message M itself may be used as a service data S (e.g. when the message M is signed using electronic signature from which the sender can be reliably identified and tied to a contract).

The sender A may send electronic message M to its usual message intermediary D using method A1 in a way that intermediary D automatically forwards message M to service provider DC1 using method A2 (e.g. by appending domain name of the service provider at the end of the electronic mail address). When using this method the sender must provide final recipient address (data for routing RT) that may be part of the message M, electronic address of the receiver or service data S.

Service provider DC1 accepts the message M, checks service data S and data for message routing RT and using method C2 forwards cryptographically protected message C that may include data M, RT and S with optional instructions and other data intended for message reception I into the receiver's mailbox E. At the same time using usual mechanisms for sending electronic messages sends message R with message sent receipt to the sender A.

In the case when the sender A changes its chosen intermediary for message forwarding D with the service provider DC1 the data for routing RT becomes optional and message sending procedure A3 may be simplified.

Sent receipt R may be cryptographically protected (e.g. using electronic signature) with the intent to provide authenticity and integrity of the data and connection between message sent receipt R and message M may exist as a proof of connection between message M and sent receipt R.

### Embodiment: Sending a message using the proxy

The sender A (figure 1) may use dedicated message proxy DC2 for sending a message M using method A4. The message proxy DC2 is provided by the service provider, may be developed by the sender itself or by a third party. Dedicated message proxy DC2 automatically obtains and provides service data S to the service provider DC1.

Service provider DC I accepts the message using method A5, checks service data S and using method C2 forwards to receiver B cryptographically protected message C and corresponding message header CH that may include data M and S with optional instructions and other data intended for message reception 1 into the receiver's mailbox E. At the same time using existing mechanisms for sending electronic messages sends message with message sent receipt R to the sender A.

If configured that way message proxy DC1 may construct or request service data S in the name of the sender A and request message sent receipt R after sending the message for a single or a number of senders A.

All the procedures and methods used when sending messages without a proxy can also be used when sending messages with the proxy.

### Embodiment: Receiving a message without a proxy

The receiver B receives cryptographically protected message C with corresponding message header CH and optional additional instructions for receiving message I in its mailbox E. The receiver B receives the message C and optional instructions I using existing protocol with common electronic mail client using a method B1.

In order to allow the receiver B to read the message content M it has to confirm reception of the message. The receiver B itself or with the help of the service provider DC1 (e.g. on his website) confirms the reception of the message with the confirmation of the read receipt AR. The read receipt AR may be cryptographically protected (for protection of the identity of the signer and integrity, e.g. using an electronic signature).

The receiver B provides read receipt AR together with the cryptographically protected message C to the service provider DC1 that opens (e.g. deciphers) the message M using the key K known only to the service provider DC1 and provides the receiver B with the message M.

Method B4 on figure 1 may be simplified by using informational message I composed in a way that allows automated sending of message C and/or message header CH to the service provider DC1 (e.g. by inserting content of the message C into a HTML form being a part of message I and sending that content to the web page of the service provider DC1). Service provider DC1 can than automatically unlock (decipher) message C and present or send message M to the receiver B after the receiver B confirms message received receipt AR.

### Embodiment: Receiving a message using a proxy

The receiver B (figure 1) may use dedicated message proxy DC3 for receiving the message M. The message proxy DC3 may be provided by the service provider, developed by the receiver itself or by a third party. Dedicated message proxy DC3 may also be exactly the same as message proxy DC2.

Message proxy DC3 on request of the message receiver B receives header of the cryptographically protected message CH and cryptographically protected message C using method B3 from electronic mailbox E using regular protocol for exchange of electronic messages. Just after receiving message C from the mailbox E using method B3 the message proxy DC3 requests confirmed message received receipt AR from the receiver B and provides service provider with the message received receipt AR using method B4. Using method B4 message proxy DC3 provides service provider DC1 at least with the message header of the cryptographically protected message CH and confirmed message received receipt AR and in return accepts key K for deciphering cryptographically protected message C. With received key K message proxy DC3 deciphers message C and delivers message M to the message receiver B using an existing protocol for message exchange B2.

If configured that way message proxy DC3 alone may confirm message received receipt AR in the name of the receiver B and may do that for a number of receivers B.

All the procedures and methods used when receiving messages without a proxy can also be used when receiving messages with the proxy.

### Embodiment: Transactional Integrity

Service data S and cryptographically protected message C take part in transactional integrity assurance.

Figure 3 shows service data S assuring the sender A and the message proxy DC2 that they can request message sent receipt R from the service provider DC1 at any time. This procedure allows that the sender A can obtain message sent receipt even in situations, when it did not receive message sent receipt from the service provider DC1 using normal execution of the method S1 or that the message proxy DC2 can obtain message sent receipt even in situations, when it did not receive message sent receipt R from the service provider DC1 using normal execution of the method S3 (e.g. in the case of a network failure).

### Figure 3: Transactional Integrity

The received cryptographically protected message C and message header CH (figure 3) assure to the sender B and/or proxy DC3 that they can obtain message M and/or key K from the service provider DC1 at any time. Using the methods K1 and K3 the receiver B and/or proxy DC3 can obtain the message M and/or key K even in unpredictable situations when during normal execution of the protocol after sending message received receipt to the service provider DC1 they do not successfully receive the message M and/or key K because of an unpredictable failure (e.g. network failure). With every subsequent request after the service provider DC1 successfully received message received receipt AR the receiver B does not have to supply message proxy DC1 with the message received receipt.

Procedure described allows that the sender A does not have to store message M after successfully sending it to the service provider DC1 and that message proxy DC2 does not have to re-send the entire cryptographically protected message C to the message provider DC1 in order to re-decipher message C as message header CH of the cryptographically protected message alone is sufficient to redeem the key.

Figure 4 shows the embodiment in which service data S assures the sender A that it can obtain service state or message received receipt AR at any time.

### Figure 4: Transmission of the message received receipt

With normal execution of the protocol for electronic service of certified messages (figure 4) the receiver B must provide the service provider DC1 with confirmed message received receipt AR in order to receive deciphered message M from the service provider DC I using method K I or the key K for deciphering the cryptographically protected message C using the method K3. At that time the service provider DC1 sends message received receipt to the sender A using regular electronic mail protocols into its electronic mailbox C. In the case of unexpected behavior of the electronic mailbox C or other unexpected events during transmission of the message with the message received receipt between the service provider DC I electronic mailbox C and the sender A, the sender of the message M may at any time request from the service provider DC1 report on the current state of the message service or message received receipt AR by sending service data S to the service provider DC1 using method T1 or by sending service data S to the service provider DC1 using method T3 and message proxy DC2.

### Concluding remarks

Instead of general (existing) protocols for message exchange stated in the description of this system and method, the proposed system and method could use dedicated, specific protocols meant for other purposes than message exchange or even developed for the purpose of the proposed system and method.

The receiver or sender in the context of the proposed system and method may be user, software or device for sending/receiving messages.

Distinctive features of the proposed device, system and method are:
- Notification of message received or instructions for receiving the message (I) is cryptographically protected (locked) sent message.
- Notification of message received is at the same time software for semi-automated reception of the message and confirmation of message received receipt.
- The service data (electronic stamp - S) is payment data and service configuration data at the same time.
- When business relationship between the sender (A) and service provider (DC1) already exists and allows service provider (DC1) to charge or perform the service for free depending on the business relationship and the sender can be trustworthy obtained from the message M (e.g. from the electronic signature), the message M itself may be treated as a service data S.
- The system assures transactional integrity based on service data (S) and cryptographically protected message (C) or message header (CH) when the message (M) is also stored with the service provider (DC1).
- Message sending proxy (DC2) can automatically send messages in the name of a number of senders (A).
- Message receiving proxy (DC3) may automatically receive messages in the name of a number of receivers (B).
- Separation of service data (S), message (M) and method for assuring transactional integrity allow for full anonymity of the sender.
- The proposed system may be included into existing systems for message exchange without change of infrastructure on sender and receiver end and without the change of infrastructure of existing intermediaries of electronic messages.
- Receiver (B) may receive messages in the existing electronic mailbox (E) and existing electronic mail address.
- Receiver (B) may confirm message received receipt (AR) using electronic signature.

## Claims

1. Method for electronic service of certified electronic messages for sending messages with service data over a network comprising a sender of messages (A), a message proxy (DC2)and a service provider (DC1) connected to each other, the method comprising the steps of:
the sender requesting a service data (S), which is an electronic stamptaking part in transactional integrity assurance, by providing a payment data (P) and service properties (O) to the message proxy (DC2);
the sender obtaining the service data (S) from the service provider (DC1) through the message proxy (DC2);
the sender sending the message to the service provider (DC1) via the message proxy (DC2) with the service data as a regular attachment.

2. Method according to claim 1, further comprising the step of the sender receiving a message sent receipt (R) from the service provider (DC1) by sending the service data.

3. Method according to any of previous claims, wherein said service properties comprising at least one of the following: data about the sender, data about the receiver, data about additional services, period of storing the message being sent, number of retries in the case of a service failure, said service data (S) taking part in transactional integrity assurance.

4. Device for electronic service of certified electronic messages comprising at least central processing unit with accompanying circuitry for operation of the central processing unit and its communication with other parts of the device, power supply unit, temporary memory for reading and writing, controller, network adapter, permanent memory for reading and writing and on/off button further comprising network connected and configured in a way that allows communication with message senders, receivers and intermediaries, **characterized in that** it performs method according to any of the previous claims.

## Patentansprüche

1. Die Methode für elektronische Dienstleistungen für zertifizierte elektronische Nachrichten für das Senden von Nachrichten mit Servicedaten über das Netzwerk umfasst den Nachrichtensender (A), das Nachrichten Proxy (DC2) und den Dienstanbieter (DC1), die miteinander verbunden sind, die Methode umfasst dabei folgende Schritte:
Der Sender verlangt Servicedaten (S), die ein elektronischer Abdruck sind, wobei dieser ein Teil der Versicherung der transaktionalen Integrität ist, durch die Versorgung von Zahlungsdaten (P) und Diensteigenschaften (O) für das Nachrichten Proxy (DC2).
Der Sender gewinnt Servicedaten (S) von dem Dienstanbieter (DC1) durch das Nachrichten Proxy (DC2).
Der Sender schickt die Nachricht dem Dienstanbieter (DC1) via Nachrichten Proxy (DC2) mit Servicedaten als eine reguläre angehängte Datei.

2. Die Methode aus dem Anspruch 1 umfasst im Weiteren den Schritt, in dem der Sender die Bestätigung (R) bekommt, das die Nachricht verschickt worden ist, von dem Dienstanbieter (DC1) durch das Verschicken von Servicedaten.

3. Die Methode aus irgendeinem der vorherigen Ansprüche, worin die genannten Diensteigenschaften mindestens einen der folgenden umfassen: Daten zu dem Sender, Daten zu dem Empfänger, Daten zu den zusätzlichen Dienstleistungen, der Periode der Aufbewahrung von gesandten Nachrichten, der Zahl der erneuten Versuche im Falle der Misserfolge in der Kommunikation, der erwähnten Servicedaten (S), wobei dieser ein Teil der Versicherung der transaktionalen Integrität ist.

4. Das Gerät für elektronische Dienstleistung für zertifizierte elektronische Nachrichten umfasst mindestens die zentrale Prozesseinheit mit den begleitenden Schaltkreisen für die Operationen der zentralen Bearbeitungseinheit und ihrer Kommunikation mit den anderen Teilen des Gerätes, die Stromversorgungseinheit, den temporären Speicher für das Lesen und Schreiben, den Kontroller, den Netzwerkadapter, den Dauerspeicher für das Lesen und Schreiben und den Ein-Aus-Regelung, im Weiteren umfasst es das Netzwerk, das so verbunden und konfiguriert ist, dass es die Kommunikation mit den Nachrichtensendern, Nachrichtenempfängern und Nachrichtenvermittlern ermöglicht, charakterisiert dadurch, dass es die Methode aus irgendeinem der vorherigen Ansprüche ausführt.

## Revendications

1. Le procédé mis en place pour le service électronique de messages électroniques certifiés prévu pour l'envoi de messages avec des données de service sur un réseau comprenant un expéditeur de messages (A), un proxy de message (DC2) et un fournisseur de service (DC1) tous reliés les uns aux autres, comprend des étapes consistant à ce que :
l'expéditeur requiert un ensemble de données de service (S), qui est un timbre électronique assurant la garantie de l'intégrité des transactions, en fournissant un ensemble de données de paiement (P) et des propriétés de services (S) au proxy de messages (DC2);
l'expéditeur obtient les données de service (S) du fournisseur de service (DC1) via le proxy de message (DC2);
l'expéditeur envoie le message au fournisseur de service (DC1) via le proxy de message (DC2) avec les données de service sous la forme d'une pièce jointe normale.

2. Conformément à la revendication le procédé comprend en outre l'étape consistant à ce que l'expéditeur d'un message envoyé reçoive un accusé de réception (R) du fournisseur de service (DC1) via l'envoi de données de service.

3. Conformément à l'une quelconque des revendications précédentes, le procédé inclut des propriétés de service qui comprennent au moins l'un des éléments suivants : les données sur l'expéditeur, les données sur le destinataire, les données concernant des services supplémentaires, la période de stockage du message envoyé, le nombre de tentatives dans le cas d'une panne du service, ledit service de données (S) assure la garantie de l'intégrité transactionnelle.

4. Le dispositif prévu pour le service électronique de messages électroniques certifiés comprenant au moins l'unité centrale de traitement avec un système de circuits prévu pour le bon fonctionnement de l'unité centrale de traitement et de ses communications avec les autres parties de l'appareil, l'unité d'alimentation électrique, la mémoire temporaire pour la lecture et l'écriture, le contrôleur, l'adaptateur de réseau, la mémoire permanente pour la lecture et l'écriture et la touche ON / OFF, comprenant en outre un réseau connecté et configuré de telle manière que la communication entre les expéditeurs de messages, les destinataires et les intermédiaires, est permise, se **caractérise par le fait qu'**il permet au procédé de se réaliser conformément à l'une quelconque des revendications précédentes.
